# FASCICULE DE BREVET EUROPEEN

(11) **EP 4 214 655 B1**
(45) Date de publication et mention de la délivrance du brevet: **28.01.2026**
(21) Numéro de dépôt: 21782492.9
(22) Date de dépôt: 20.09.2021
(51) Int. Cl.: G06Q 10/04, E04H 14/00, G07C 11/00

(54) **SYSTEME DE REMISE D'UNE COMMANDE EN POINT-RETRAIT**
DRIVE-THRU-SYSTEM ZUR LIEFERUNG EINER BESTELLUNG
DRIVE-THRU SYSTEM FOR DELIVERY OF ORDERED ITEMS

(30) Priorité: 18.09.2020 EP 20197079
(43) Date de publication de la demande: 26.07.2023
(73) Titulaire: Exotec Product France, 59170 Croix (FR)
(72) Inventeur: MOULIN, Romain, 59800 Lille (FR); HEITZ, Renaud, 59650 Villeneuve d' Ascq (FR); CHATAIN, Marc, 68230 Zimmerbach (FR)
(74) Mandataire: Plasseraud IP
(86) Numéro de dépôt international: PCT/EP2021/075834
(87) Numéro de publication internationale: WO 2022/058596

(56) Documents cités:
- US-A- 3 647 026
- US-A1- 2014 114 778
- US-B1- 7 054 832
- BENDER MICHAEL: "Piloting Delivery with Uber, Lyft and Deliv", 3 June 2016 (2016-06-03), pages 1 - 3, XP055865346, Retrieved from the Internet <URL:https://corporate.walmart.com/newsroom/business/20160603/piloting-delivery-with-uber-lyft-and-deliv> [retrieved on 20211124]
- HOFBAUER RANDY: "Walmart Tests Online Grocery Pickup for EBT Users | Progressive Grocer", 19 September 2017 (2017-09-19), pages 1 - 3, XP055865333, Retrieved from the Internet <URL:https://progressivegrocer.com/walmart-tests-online-grocery-pickup-ebt-users> [retrieved on 20211124]
- SHARMA AJIT ET AL: "Drive Through Robotics: Robotic Automation for Last Mile Distribution of Food and Essentials During Pandemics", IEEE ACCESS, IEEE, USA, vol. 8, 6 July 2020 (2020-07-06), pages 127190 - 127219, XP011800122, DOI: 10.1109/ACCESS.2020.3007064
- ANONYMOUS: "Station Car Parking Good Practice Guide Station Car Parking Good Practice Guide", 1 February 2018 (2018-02-01), pages 1,44,48, XP055865286, Retrieved from the Internet <URL:https://www.raildeliverygroup.com/media-centre-docman/123-2018-02-station-car-parking-guide/file.html> [retrieved on 20211124]
- RYAN TOM: "Walmart expands test of pickup-only grocery store concept", 1 October 2018 (2018-10-01), pages 1 - 1, XP055865363, Retrieved from the Internet <URL:https://www.retailwire.com/discussion/walmart-expands-test-of-pickup-only-grocery-store-concept/> [retrieved on 20211124]
- CHARLTON GRAHAM: "Asda (Drive-thru photo)", 31 August 2016 (2016-08-31), pages 1 - 1, XP055865467, Retrieved from the Internet <URL:https://www.clickz.com/how-will-amazon-affect-the-future-of-the-uk-grocery-industry/105386/asda-4/> [retrieved on 20211124]

## Description

### 1. Domaine de l'invention

Le domaine de l'invention est celui de la logistique dans les magasins fournissant un service de livraison de commande en point-retrait, aussi appelé « Drive ».

Plus précisément, l'invention concerne un système de remise d'une commande en point-retrait.

L'invention trouve notamment une application dans le retrait de produits alimentaires ou de grande consommation en point-retrait.

### 2. Etat de la technique

Il est connu dans les magasins proposant un service de livraison de commande effectuées en lignes à un point retrait, dit service de « drive », qu'un ou plusieurs préparateurs entreposent les articles d'un commande collectés dans des sacs sur des étagères, en attendant que le client vienne retirer sa commande. Le tri des articles d'une commande peut être mis en œuvre lors de la tournée de ramassage ou au moment de mettre la commande sur étagère.

Cette technique de préparation d'une commande présente de nombreux inconvénients. Elle nécessite en effet une main d'œuvre importante. Par ailleurs, avec cette technique connue, un client qui vient retirer sa commande peut se voir imposer un temps d'attente plus ou moins long, le temps qu'un préparateur aille chercher sa commande dans les étagères pour lui remettre ou dans le cas où tous les préparateurs sont occupés à effectuer une tournée de ramassage et ne sont pas disponibles pour lui remettre sa commande.

Afin de limiter le temps d'attente des clients, on a pensé à mettre en oeuvre des pistes de livraison automatisée des articles de commandes à partir d'une installation de stockage tampon également automatisée, qui permettent de remettre sa commande à un client de façon automatique dès que le client signale sa présence sur une borne du point-retrait.

Avec cette technique connue, un temps d'environ 2 à 3 minutes est toutefois nécessaire pour rassembler les articles de la commande et les livrer au point-retrait. Le véhicule du client reste ainsi au total environ 5 à 6 minutes stationné au niveau du point-retrait, en ajoutant le temps nécessaire pour le client pour charger les articles dans son véhicule, ce qui limite à 10-12 le nombre de client pouvant être livré par heure au niveau d'un poste de prélèvement d'un point-retrait avec cette technique connue.

Pour augmenter le nombre de client pouvant être livrés par heure au niveau d'un poste de prélèvement d'un point-retrait, on a pensé à mettre en œuvre des bornes supplémentaires à l'entrée des parkings des magasins permettant à chaque client de signaler son arrivée avant qu'il se rende au point-retrait, pour pouvoir commencer à rassembler les articles de sa commande stockées dans l'installation de stockage-tampon et les acheminer du stock-tampon jusqu'au point-retrait dès que le client pénètre sur le parking.

Cette technique connue permet cependant d'augmenter de façon assez réduite le nombre de client pouvant être livrés par heure (de l'ordre de 20% au maximum), du fait que le temps nécessaire pour parcourir la distance entre l'entrée du parking et le point-retrait est généralement assez court, et le plus souvent est inférieur à 1 minute.

### 3. Objectifs de l'invention

L'invention a donc notamment pour objectif de pallier les inconvénients de l'état de la technique cités ci-dessus.

Plus précisément l'invention a pour objectif de fournir une technique de remise de commandes en point-retrait qui augmente significativement le nombre de client auxquels peut être remis une commande par heure au niveau d'un poste de prélèvement d'un point-retrait.

L'invention a notamment pour objectif, dans des modes de réalisation particuliers de l'invention, de fournir une telle technique qui permettre de remettre au moins 20 commandes par heure par poste de prélèvement de commande.

Un objectif de l'invention est également de fournir une telle technique de remise de commandes qui soit simple à mettre en œuvre.

Encore un objectif de l'invention est de fournir une telle technique qui soit d'un coût réduit.

### 4. Exposé de l'invention

Ces objectifs, ainsi que d'autres qui apparaitront par la suite sont atteints à l'aide d'un système de remise automatique de commandes commandées en ligne à proximité du coffre d'un véhicule comprenant :
- un point-retrait présentant une pluralité de postes de prélèvement de commandes, à chacun desquels est associée une voie d'accès et de stationnement pour véhicule automobile, adjacente à celui-ci ;
- une installation automatisée de stockage tampon d'articles ayant fait l'objet d'une commande ;
- des moyens d'acheminement automatisés desdits articles stockés de ladite installation de stockage tampon jusqu'auxdits postes de prélèvement,
- une unité de gestion de remise des commandes apte à ordonner la collecte des articles d'une commande dans ladite installation de stockage tampon et à commander l'activation des moyens d'acheminement desdits articles.

Selon l'invention, chaque voie d'accès comprend un premier emplacement et un deuxième emplacement de stationnement de véhicules, ledit deuxième emplacement étant placé derrière ledit premier emplacement dans ladite voie, et ledit point retrait comprend, pour chaque poste de prélèvement de commandes :
- un premier code-barre à 2 dimensions visible à partir dudit premier emplacement de stationnement comprenant une information d'identification dudit poste de prélèvement de commande et/ou des premiers moyens de signalement de la demande de remise d'une commande situés à proximité immédiate dudit premier emplacement de stationnement et/ou des moyens de détection de la présence d'un client ayant réalisé une commande à proximité dudit premier emplacement de stationnement;
- un deuxième code-barre à 2 dimensions visible à partir dudit deuxième emplacement de stationnement comprenant une information d'identification dudit poste de prélèvement de commande et/ou des deuxièmes moyens de signalement de la demande de remise d'une commande situés à proximité immédiate dudit deuxième emplacement de stationnement et/ou des moyens de détection de la présence d'un client ayant réalisé une commande à proximité dudit deuxième poste de stationnement,
et ladite unité de gestion de remise des commandes est configurée de sorte que lorsque ledit premier ou ledit deuxième code-barre à deux dimensions est scanné par un client ayant réalisé une commande grâce à une application dédiée téléchargeable sur un terminal dudit client apte à transmettre un signal à ladite unité de gestion comprenant une information d'identification de ladite commande et ladite information d'identification dudit poste de prélèvement de commande contenue dans ledit premier ou ledit deuxième code-barre, lorsqu'une demande de remise d'une commande est signalée par lesdits premiers ou lesdits deuxièmes moyens de signalement ou lorsque la présence d'un client d'une commande est détectée à proximité dudit premier ou dudit deuxième emplacement de stationnement, ladite unité de gestion génère des instructions de commande de l'activation de la collecte, au sein de ladite installation de stockage tampon, des articles de la commande signalée ou de la commande du client ayant scanné un desdits codes-barres ou de la commande du client ayant été détecté à proximité d'un emplacement de stationnement et des instructions de commande de l'acheminement desdits articles par lesdits moyens d'acheminement à hauteur du poste de prélèvement associé audit premier code-barre ou audit deuxième code-barre ayant été scanné par ledit client ou auxdits premiers ou auxdits deuxièmes moyens de signalement ayant signalé une demande de remise de la commande dudit client ou à la voie d'accès où la présence dudit client a été détectée, si lesdits articles sont présents au sein de ladite installation de stockage tampon.

Ainsi, de façon inédite, l'invention propose de mettre en œuvre, par poste de prélèvement d'un point-retrait, deux codes-barres et/ou deux moyens de signalement d'une demande de remise d'une commande et/ou des moyens de détection de la présence d'un client à deux emplacements différents de stationnement, afin d'augmenter le nombre de remise de commandes par heure au niveau de chaque poste de prélèvement.

Les inventeurs ont ainsi constaté qu'avec l'invention, il était possible d'augmenter de plus de 60% le nombre de commandes remises par heure en point-retrait par rapport aux techniques de remise d'une commande au niveau d'un point-retrait connues, pour un même nombre de postes de prélèvement.

Dans un mode de réalisation particulier de l'invention, lesdits premiers moyens de signalement et/ou lesdits deuxièmes moyens de signalement comprennent une borne.

De préférence, lesdits premiers moyens de signalement et lesdits deuxièmes moyens de signalement sont espacés de 5 à 10 mètres.

Avantageusement, lesdites voies d'accès et de stationnement sont disposées en épi et forment un angle de 30 à 50° avec une voie de desserte dudit point-retrait.

Dans des modes de réalisation particuliers de l'invention, lesdits premiers moyens de signalement et/ou lesdits deuxièmes moyens de signalement comprennent au moins un élément de signalement appartenant au groupe comprenant au moins :
- lecteur de code barre ;
- lecteur de QR code ;
- lecteur de bande magnétique ou de puce ;
- clavier numérique permettant de saisir un code ;
- lecteur d'identification biométrique, tel qu'un lecteur d'empreinte digitale.

Dans des modes de réalisation particuliers de l'invention, lesdits moyens de détection de la présence d'un client ayant réalisé une commande à proximité dudit premier emplacement de stationnement et/ou lesdits moyens de détection de la présence d'un client ayant réalisé une commande à proximité dudit deuxième emplacement de stationnement comprennent au moins un élément de détection appartenant au groupe comprenant au moins :
- capteur de présence ;
- système de géolocalisation ;
- dispositif de reconnaissance de plaque d'immatriculation.

Dans un mode de réalisation avantageux de l'invention, ledit point-retrait comprend, pour chaque voie d'accès et de stationnement, des moyens de signalisation du nombre de véhicules stationnés dans ladite voie d'accès et de stationnement.

Selon un aspect particulier de l'invention, lesdits moyens de signalisation du nombre de véhicules stationnés dans une voie d'accès et de stationnement comprennent un feu tricolore.

Dans un mode de réalisation avantageux de l'invention, lesdits articles stockés étant remis dans des bacs auxdits postes de prélèvement, au moins un desdits postes de prélèvement comprend des moyens de transfert de bacs vides vers lesdits moyens d'acheminement automatisés.

L'invention concerne également un procédé de remise automatique de commandes commandées en ligne à proximité du coffre d'un véhicule dans un point-retrait présentant une pluralité de postes de prélèvement de commandes, à chacun desquels est associée une voie d'accès et de stationnement pour véhicule automobile, adjacente à celui-ci, chaque voie d'accès comprend un premier emplacement et un deuxième emplacement de stationnement de véhicules, ledit deuxième emplacement étant placé derrière ledit premier emplacement dans ladite voie, ledit point-retrait étant associé à :
- une installation automatisée de stockage tampon d'articles ayant fait l'objet d'une commande ;
   - des moyens d'acheminement automatisés desdits articles stockés de ladite installation de stockage tampon jusqu'auxdits postes de prélèvement,
   - une unité de gestion de remise des commandes apte à ordonner la collecte des articles d'une commande dans ladite installation de stockage tampon et à commander l'activation des moyens d'acheminement desdits articles ; ledit point-retrait comprenant, pour chaque poste de prélèvement de commandes :
   - un premier code-barre à 2 dimensions visible à partir dudit premier emplacement de stationnement comprenant une information d'identification dudit poste de prélèvement de commande et/ou des premiers moyens de signalement de la demande de remise d'une commande situés à proximité immédiate dudit premier emplacement de stationnement et/ou des moyens de détection de la présence d'un client ayant réalisé une commande à proximité dudit premier emplacement de stationnement ;
   - un deuxième code-barre à 2 dimensions visible à partir dudit deuxième emplacement de stationnement comprenant une information d'identification dudit poste de prélèvement de commande et/ou des deuxièmes moyens de signalement de la demande de remise d'une commande situés à proximité immédiate dudit deuxième emplacement de stationnement et/ou des moyens de détection de la présence d'un client ayant réalisé une commande à proximité dudit deuxième poste de stationnement,
ledit procédé comprenant les étapes suivantes :
- scan par un client ayant réalisé un commande dudit deuxième code-barre à deux dimensions grâce à une application dédiée téléchargeable sur un terminal dudit client apte à transmettre un signal à ladite unité de gestion comprenant une information d'identification de ladite commande et ladite information d'identification dudit poste de prélèvement de commande contenue dans ledit deuxième code-barre ou signalement d'une demande de remise d'une commande à l'aide desdits deuxièmes moyens de signalement ou détection de la présence d'un client à proximité dudit deuxième emplacement de stationnement ;
- à compter dudit scan ou dudit signalement ou de ladite détection, génération par ladite unité de gestion d'instructions de l'activation de la collecte, au sein de ladite installation de stockage tampon, des articles de la commande signalée ou de la commande du client ayant scanné un desdits code-barre ou de la commande du client ayant été détecté à proximité d'un emplacement de stationnement et d'instructions de commande de l'acheminement desdits articles par lesdits moyens d'acheminement à hauteur du poste de prélèvement associé audit deuxième code-barre ayant été scanné par ledit client ou associé auxdits deuxièmes moyens de signalement ayant signalé une demande de remise de la commande dudit client ou associé à la voie d'accès où la présence dudit client a été détectée
- scan par le même client dudit premier code-barre à deux dimensions grâce à ladite application dédiée téléchargeable sur un terminal dudit client apte à transmettre un signal à ladite unité de gestion comprenant une information d'identification de ladite commande et ladite information d'identification dudit poste de prélèvement de commande contenue dans ledit premier code-barre ou signalement d'une demande de remise de la commande dudit client à l'aide desdits premiers moyens de signalement ou détection de la présence du même client à proximité dudit premier emplacement de stationnement ;
- remise des articles de la commande audit poste de prélèvement associé audit premier code-barre ayant été scanné par ledit client ou associé auxdits premiers moyens de signalement ayant signalé une demande de remise de la commande dudit client ou associé à la voie d'accès où la présence dudit client a été détectée.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des figures annexées parmi lesquelles :
- la figure 1 est une vue schématique de dessus d'un exemple de mode de réalisation d'un système de remise de commandes selon l'invention ;
- la figure 2 est une vue de côté d'un poste de prélèvement d'un autre exemple de mode de réalisation d'un système de remise de commandes selon l'invention.

### 6. Description détaillée de l'invention

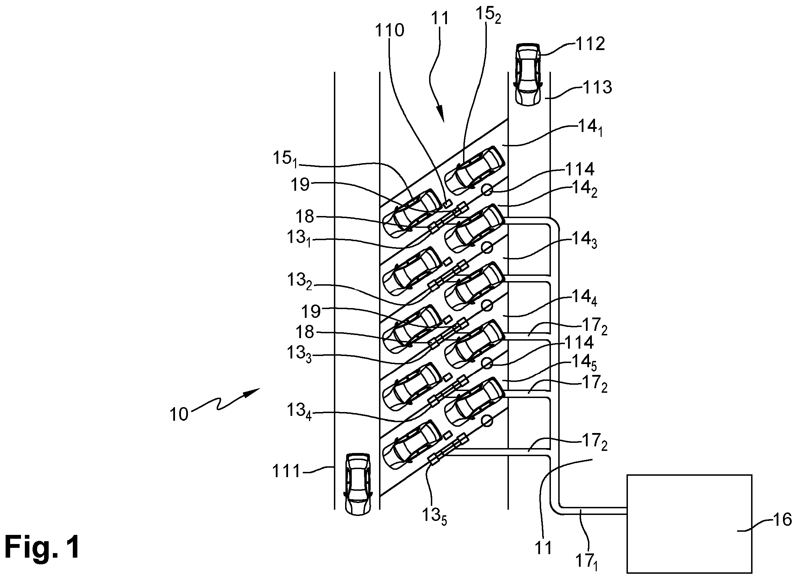

La figure 1 illustre un exemple de mode de réalisation d'un système de remise de commandes 10 selon l'invention au niveau d'un point-retrait d'un magasin de la grande distribution.

Ce point-retrait 11 est implanté à proximité d'un entrepôt de stockage 12 adossé à la surface de vente du magasin et présente, dans ce mode de réalisation particulier de l'invention, cinq postes 13₁ à 13₅ de prélèvement de commandes en parallèle auxquels on accède en voiture par cinq voies d'accès et de stationnement temporaire 14₁ à 14₅, en épi, associées chacune à un poste de prélèvement 13.

Chacune des voies 14₁ à 14₅ est dimensionnée pour accueillir deux véhicules automobiles 15₁, 15₂ l'un derrière l'autre.

Les différents articles d'une commande sont acheminés aux postes de prélèvement 13₁ à 13₅ dans des bacs à partir d'une installation de stockage tampon (non représentée sur la figure 1), où ces articles ont été stockées temporairement, via une piste aérienne de convoyage principale 17₁ qui se divise en cinq pistes aériennes secondaires 17₂ dont l'extrémité débouche sur une colonne de livraison des articles au niveau d'un poste de prélèvement 13₁, 13₂, 13₃, 13₄ ou 13₅.

Lorsqu'un premier client 110 du magasin, qui a au préalable effectué une commande en ligne via Internet se stationne dans une voie 14₁, 14₂, 14₃, 14₄ ou 14₅ libre de tout véhicule et se signale à une première borne 18 équipant un poste de prélèvement, par exemple en saisissant un code sur un écran ou un clavier, ou en scannant un code-barre correspondant à sa commande, qui lui a été transmis sur son smartphone, à l'aide d'un lecteur de code-barre équipant la borne 18, l'unité informatique de gestion de remise des commandes du système 10 commande alors à des robots équipant l'installation de stockage (non représentés sur la figure 1) de prélever les articles de sa commande dans les rayonnages de stockage de l'installation tampon et de les transporter jusqu'à un poste de transfert où ils sont déposés sur la piste de convoyage principale 17₁. Les articles de la commande sont alors transportés sur la piste principale et distribués sur la piste secondaire 17₂ allouée au poste de prélèvement 13₁, 13₂, 13₃, 13₄ ou 13₅ où le client s'est signalé pour que sa commande lui soit remise. Les bacs contenant les produits de la commande sont transférés successivement de la piste secondaire 17₂ dans un ascenseur, qui les dépose sur une table de remise de commande, où le client peut prélever les articles de sa commande pour les déposer dans le coffre de son véhicule 15₁.

Une deuxième borne de signalement 19 est implantée au niveau de chaque poste de prélèvement 13_{1 à} 13₅, en amont de la première borne 18, au regard du sens circulation de la voie d'accès 14₁, 14₂, 14₃, 14₄ ou 14₅ associée à ce poste de prélèvement. Cette deuxième borne 19 est, dans ce mode de réalisation particulier de l'invention, espacée de la première borne 18 d'une distance sensiblement égale à la longueur d'une place de stationnement.

Lorsqu'un second client stationne son véhicule 15₂ sur la même voie d'accès que le véhicule 15₁ du premier client, derrière celui-ci, en attendant le départ du premier client, il signale sa présence sur la deuxième borne 19, par exemple en saisissant un code, ou en scannant un code-barre, correspondant à sa commande. L'unité informatique de gestion de remise des commandes du système 10 commande alors à des robots de l'installation de stockage de prélever les articles de la commande du deuxième client dans les rayonnages de stockage de l'installation tampon et de les transporter jusqu'à un poste de transfert où ils sont déposés sur la piste de convoyage principale 17₁. Les articles de la commande sont alors transportés sur la piste principale et distribués sur la piste secondaire 17₂, où ils sont mis en attente. Lorsque le premier client a achevé de charger sa commande dans son véhicule et quitte la voie d'accès 14₁, 14₂, 14₃, 14₄ ou 14₅ pour rejoindre l'allée de sortie 111, le deuxième client avance son véhicule jusqu'au niveau de la première borne 18 et signale à nouveau sa présence au niveau de la borne 18, les articles de sa commande qui sont en attente sur la piste de convoyage secondaire 17₂ lui sont directement remis successivement sur la table de remise de commande. Il peut alors les prélever et les charger dans le coffre de son véhicule 15₂. On comprend aisément que l'utilisation des deux bornes 18 et 19 permet d'augmenter le nombre de commandes pouvant être remises par heure au niveau de chaque poste de prélèvement 13₁ à 13₅, du fait que l'acheminement vers le poste de prélèvement des articles du client qui attend que la commande du client qui le précède lui soit remise débute dès que celui-ci se signale au niveau de la deuxième borne 19.

Il convient par ailleurs de noter que pour faciliter le placement des véhicules dans les voies d'accès, chaque véhicule 112 qui se présente dans l'allée de desserte 112 est dirigé vers un poste de prélèvement libre à l'aide de feux tricolores 114 placés à l'entrée de chaque voie d'accès 14₁ à 14₅. Ainsi par exemple, un feu rouge indique que deux véhicules automobiles sont déjà stationnés sur la voie d'accès, un feu orange qu'un seul véhicule est stationné sur la voie d'accès et un feu vert que la voie d'accès est libre de tout véhicule.

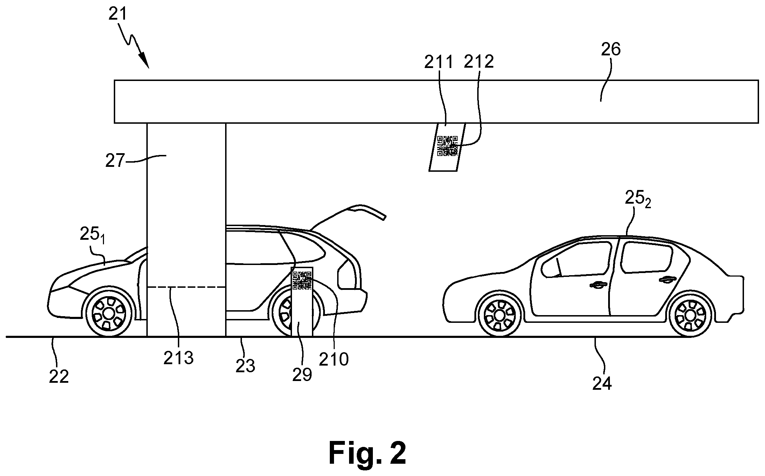

On a représenté sur la figure 2 un poste de prélèvement 21 d'un autre exemple de mode de réalisation d'un système de remise de commandes selon l'invention, en vue de côté.

Ce poste de prélèvement est accolé à une voie d'accès et de stationnement 22 présentant un premier emplacement de stationnement 23 et, à l'arrière de celui-ci, un deuxième emplacement de stationnement 24, sur lesquels sont stationnés deux véhicules 25₁ et 25₂, dans la situation représentée sur la figure 2.

Ce poste de prélèvement 21 comprend une table de remise de commandes 213 sur laquelle sont déposés les articles des commandes des clients en provenance d'une zone de stockage tampon, acheminées via une piste aérienne de convoyage secondaire 26 dont l'extrémité débouche sur une colonne de livraison 27. Il comprend également, au niveau du premier emplacement de stationnement 23, une borne 29 sur laquelle s'affiche ou est imprimé un QR-code 210 comprenant une information représentative du poste de prélèvement 21 et à l'extrémité avant du deuxième emplacement de stationnement 24, un panneau 211 en hauteur sur lequel est affiché un deuxième QR code 212 comprenant une information représentative du poste de prélèvement 21, qui dans ce mode de réalisation particulier de l'invention est identique au premier QR-code 210.

Ainsi, lorsque le véhicule 25₂ se stationne sur le deuxième emplacement 24 en attendant que le véhicule 25₁ quitte le premier emplacement de stationnement 23, un de ses occupants peut scanner le deuxième QR-code avec son smartphone sans sortir de son véhicule au moyen d'un application dédiée qu'il a téléchargée. Cette application génère alors un message vers le module de gestion de remise de commandes du point-relai contenant une information d'identification de sa commande et une information d'identification du poste de prélèvement 21, ce qui déclenche immédiatement l'acheminement des articles de sa commande vers le poste de prélèvement 21 au travers de la piste 26. Dès que véhicule 25₁ quitte le premier emplacement 23, le véhicule 25₂ peut alors s'avancer sur le premier emplacement et il suffit alors à un occupant du véhicule 25₂ de scanner le deuxième QR-code 212 sur la borne 211 avec l'application dédiée en allant ouvrir le coffre du véhicule, pour que les articles de la commande, déjà acheminés jusqu'au poste de prélèvement, soient délivrés sur la table de remise de commandes 213. Un délai très court s'écoule donc entre le moment où le deuxième QR-code 212 est scanné et le moment où un occupant du véhicule 25₂ peut charger les articles de sa commande dans le coffre du véhicule 25₂.

## Revendications

1. Système de remise automatique de commandes commandées en ligne à proximité du coffre d'un véhicule comprenant :
- un point-retrait présentant une pluralité de postes de prélèvement de commandes, à chacun desquels est associée une voie d'accès et de stationnement pour véhicule automobile, adjacente à celui-ci ;
- une installation automatisée de stockage tampon d'articles ayant fait l'objet d'une commande ;
- des moyens d'acheminement automatisés desdits articles stockés de ladite installation de stockage tampon jusqu'auxdits postes de prélèvement,
- une unité de gestion de remise des commandes apte à ordonner la collecte des articles d'une commande dans ladite installation de stockage tampon et à commander l'activation des moyens d'acheminement desdits articles ,
**caractérisé en ce que** chaque voie d'accès comprend un premier emplacement et un deuxième emplacement de stationnement de véhicules, ledit deuxième emplacement étant placé derrière ledit premier emplacement dans ladite voie, et **en ce que** ledit point-retrait comprend, pour chaque poste de prélèvement de commandes
- un premier code-barre à 2 dimensions visible à partir dudit premier emplacement de stationnement comprenant une information d'identification dudit poste de prélèvement de commande et/ou des premiers moyens de signalement de la demande de remise d'une commande situés à proximité immédiate dudit premier emplacement de stationnement et/ou des moyens de détection de la présence d'un client ayant réalisé une commande à proximité dudit premier emplacement de stationnement;
- un deuxième code-barre à 2 dimensions visible à partir dudit deuxième emplacement de stationnement comprenant une information d'identification dudit poste de prélèvement de commande et/ou des deuxièmes moyens de signalement de la demande de remise d'une commande situés à proximité immédiate dudit deuxième emplacement de stationnement et/ou des moyens de détection de la présence d'un client ayant réalisé une commande à proximité dudit deuxième poste de stationnement,
et **en ce que** ladite unité de gestion de remise des commandes est configurée de sorte que lorsque ledit premier ou ledit deuxième code-barre à deux dimensions est scanné par un client ayant réalisé une commande grâce à une application dédiée téléchargeable sur un terminal dudit client apte à transmettre un signal à ladite unité de gestion comprenant une information d'identification de ladite commande et ladite information d'identification dudit poste de prélèvement de commande contenue dans ledit premier ou ledit deuxième code-barre, lorsqu'une demande de remise d'une commande est signalée par lesdits premiers ou lesdits deuxièmes moyens de signalement ou lorsque la présence d'un client d'une commande est détectée à proximité dudit premier ou dudit deuxième emplacement de stationnement, ladite unité de gestion génère des instructions de commande de l'activation de la collecte, au sein de ladite installation de stockage tampon, des articles de la commande signalée ou de la commande du client ayant scanné un desdits codes-barres ou de la commande du client ayant été détecté à proximité d'un emplacement de stationnement et des instructions de commande de l'acheminement desdits articles par lesdits moyens d'acheminement à hauteur du poste de prélèvement associé audit premier code-barre ou audit deuxième code-barre ayant été scanné par ledit client ou auxdits premiers ou auxdits deuxièmes moyens de signalement ayant signalé une demande de remise de la commande dudit client ou à la voie d'accès où la présence dudit client a été détectée, si lesdits articles sont présents au sein de ladite installation de stockage tampon.

2. Système selon la revendication 1, **caractérisé en ce que** lesdits premiers moyens de signalement et/ou lesdits deuxièmes moyens de signalement comprennent une borne.

3. Système selon l'une quelconque des revendications 1 et 2, **caractérisé en ce que** lesdits premiers moyens de signalement et lesdits deuxièmes moyens de signalement sont espacés de 5 à 10 mètres.

4. Système selon l'une quelconque des revendications 1 à 3, **caractérisé en ce que** lesdites voies d'accès et de stationnement sont disposées en épi et forment un angle de 30 à 50° avec une voie de desserte dudit point-retrait.

5. Système selon l'une quelconque des revendications 1 à 4, **caractérisé en ce que** lesdits premiers moyens de signalement et/ou lesdits deuxièmes moyens de signalement comprennent au moins un élément de signalement appartenant au groupe comprenant au moins :
- lecteur de code barre ;
- lecteur de QR code ;
- lecteur de bande magnétique ou de puce ;
- clavier numérique permettant de saisir un code ;
- lecteur d'identification biométrique, tel qu'un lecteur d'empreinte digitale.

6. Système selon l'une quelconque des revendications 1 à 5, **caractérisé en ce que** lesdits moyens de détection de la présence d'un client ayant réalisé une commande à proximité dudit premier emplacement de stationnement et/ou lesdits moyens de détection de la présence d'un client ayant réalisé une commande à proximité dudit deuxième emplacement de stationnement comprennent au moins un élément de détection appartenant au groupe comprenant au moins :
- capteur de présence ;
- système de géolocalisation ;
- dispositif de reconnaissance de plaque d'immatriculation.

7. Système selon l'une quelconque des revendications 1 à 6, **caractérisé en ce que** ledit point-retrait comprend, pour chaque voie d'accès et de stationnement, des moyens de signalisation du nombre de véhicules stationnés dans ladite voie d'accès et de stationnement.

8. Système selon la revendication 7, **caractérisé en ce que** lesdits moyens de signalisation du nombre de véhicules stationnés dans une voie d'accès et de stationnement comprennent un feu tricolore.

9. Système selon l'une quelconque des revendications 1 à 8, **caractérisé en ce que**, lesdits articles stockés étant remis dans des bacs auxdits postes de prélèvement, au moins un desdits postes de prélèvement comprend des moyens de transfert de bacs vides vers lesdits moyens d'acheminement automatisés.

10. Procédé de remise automatique de commandes commandées en ligne à proximité du coffre d'un véhicule dans un point-retrait présentant une pluralité de postes de prélèvement de commandes, à chacun desquels est associée une voie d'accès et de stationnement pour véhicule automobile, adjacente à celui-ci, chaque voie d'accès comprend un premier emplacement et un deuxième emplacement de stationnement de véhicules, ledit deuxième emplacement étant placé derrière ledit premier emplacement dans ladite voie, ledit point-retrait étant associé à :
une installation automatisée de stockage tampon d'articles ayant fait l'objet d'une commande ;
- des moyens d'acheminement automatisés desdits articles stockés de ladite installation de stockage tampon jusqu'auxdits postes de prélèvement,
- une unité de gestion de remise des commandes apte à ordonner la collecte des articles d'une commande dans ladite installation de stockage tampon et à commander l'activation des moyens d'acheminement desdits articles;
ledit point-retrait comprenant, pour chaque poste de prélèvement de commandes :
- un premier code-barre à 2 dimensions visible à partir dudit premier emplacement de stationnement comprenant une information d'identification dudit poste de prélèvement de commande et/ou des premiers moyens de signalement de la demande de remise d'une commande situés à proximité immédiate dudit premier emplacement de stationnement et/ou des moyens de détection de la présence d'un client ayant réalisé une commande à proximité dudit premier emplacement de stationnement;
- un deuxième code-barre à 2 dimensions visible à partir dudit deuxième emplacement de stationnement comprenant une information d'identification dudit poste de prélèvement de commande et/ou des deuxièmes moyens de signalement de la demande de remise d'une commande situés à proximité immédiate dudit deuxième emplacement de stationnement et/ou des moyens de détection de la présence d'un client ayant réalisé une commande à proximité dudit deuxième poste de stationnement,
ledit procédé comprenant les étapes suivantes :
- scan par un client ayant réalisé un commande dudit deuxième code-barre à deux dimensions grâce à une application dédiée téléchargeable sur un terminal dudit client apte à transmettre un signal à ladite unité de gestion comprenant une information d'identification de ladite commande et ladite information d'identification dudit poste de prélèvement de commande contenue dans ledit deuxième code-barre ou signalement d'une demande de remise d'une commande à l'aide desdits deuxièmes moyens de signalement ou détection de la présence d'un client à proximité dudit deuxième emplacement de stationnement ;
- à compter dudit scan ou dudit signalement ou de ladite détection, génération par ladite unité de gestion d'instructions de l'activation de la collecte, au sein de ladite installation de stockage tampon, des articles de la commande signalée ou de la commande du client ayant scanné un desdits code-barre ou de la commande du client ayant été détecté à proximité d'un emplacement de stationnement et d'instructions de commande de l'acheminement desdits articles par lesdits moyens d'acheminement à hauteur du poste de prélèvement associé audit deuxième code-barre ayant été scanné par ledit client ou associé auxdits deuxièmes moyens de signalement ayant signalé une demande de remise de la commande dudit client ou associé à la voie d'accès où la présence dudit client a été détectée
- scan par le même client dudit premier code-barre à deux dimensions grâce à ladite application dédiée téléchargeable sur un terminal dudit client apte à transmettre un signal à ladite unité de gestion comprenant une information d'identification de ladite commande et ladite information d'identification dudit poste de prélèvement de commande contenue dans ledit premier code-barre ou signalement d'une demande de remise de la commande dudit client à l'aide desdits premiers moyens de signalement ou détection de la présence du même client à proximité dudit premier emplacement de stationnement ;
- remise des articles de la commande audit poste de prélèvement associé audit premier code-barre ayant été scanné par ledit client ou associé auxdits premiers moyens de signalement ayant signalé une demande de remise de la commande dudit client ou associé à la voie d'accès où la présence dudit client a été détectée.

## Patentansprüche

1. System zur automatisierten Auslieferung von Online-Bestellungen in der Nähe des Kofferraums eines Fahrzeugs, umfassend:
- eine Abholstelle mit mehreren Bestellungs-Abholstationen, denen jeweils benachbart ein Zufahrts- und Parkweg für Kraftfahrzeuge zugeordnet ist;
- eine automatisierte Pufferlageranlage für bestellte Artikel;
- automatisierte Transportmittel für die gelagerten Artikel von der Pufferlageranlage zu den Abholstationen,
- eine Verwaltungseinheit für die Auslieferung von Bestellungen, die in der Lage ist, die Entnahme der Artikel einer Bestellung aus der Pufferlageranlage anzuordnen und die Aktivierung der Transportmittel für die Artikel zu steuern, **dadurch gekennzeichnet, dass** jeder Zufahrtsweg einen ersten und einen zweiten Parkplatz für Fahrzeuge umfasst, wobei der zweite Parkplatz hinter dem ersten Parkplatz in der Zufahrt liegt, und dass die Abholstelle für jede Bestellungs-Abholstation umfasst:
- einen ersten zweidimensionalen Barcode, der vom ersten Parkplatz aus sichtbar ist und Informationen zur Identifizierung der Bestellungs-Abholstation und/oder erste Mittel zur Signalisierung der Anforderung zur Auslieferung einer Bestellung umfasst, die sich in unmittelbarer Nähe des ersten Parkplatzes befinden, und/oder Mittel zur Erkennung der Anwesenheit eines Kunden, der eine Bestellung in der Nähe des ersten Parkplatzes aufgegeben hat;
- einen zweiten zweidimensionalen Barcode, der von dem zweiten Parkplatz aus sichtbar ist und Informationen zur Identifizierung der Abholstation und/oder zweite Mittel zur Signalisierung der Anforderung zur Auslieferung einer Bestellung umfasst, die sich in unmittelbarer Nähe des zweiten Parkplatzes befinden, und/oder Mittel zur Erkennung der Anwesenheit eines Kunden, der eine Bestellung in der Nähe des zweiten Parkplatzes aufgegeben hat,
und dass die Verwaltungseinheit für die Auslieferung von Bestellungen so konfiguriert ist, dass, wenn der erste oder zweite zweidimensionale Barcode von einem Kunden gescannt wird, der eine Bestellung dank einer speziellen Anwendung aufgegeben hat, die auf ein Endgerät des Kunden heruntergeladen werden kann, das in der Lage ist, ein Signal an die Verwaltungseinheit zu senden, umfassend eine in dem ersten oder zweiten Barcode enthaltene Information zur Identifizierung der Bestellung sowie die Information zur Identifizierung der Bestellungs-Abholstation, wenn eine Anfrage zur Abgabe einer Bestellung durch die ersten oder zweiten Signalisierungsmittel signalisiert wird oder wenn die Anwesenheit eines Kunden einer Bestellung in der Nähe des ersten oder zweiten Parkplatzes erkannt wird, die Verwaltungseinheit Befehle erzeugt, zur Aktivierung der Abholung in der Pufferlageranlage der Artikel der signalisierten Bestellung oder der Bestellung des Kunden, der einen der Barcodes gescannt hat, oder der Bestellung des Kunden, der in der Nähe eines Parkplatzes erkannt wurde, und Steuerungsanweisungen für den Transport der Artikel durch die Transportmittel zu der Abholstation, die mit dem ersten Barcode oder dem zweiten Barcode verbunden ist, der von dem Kunden gescannt wurde, oder an die ersten oder zweiten Signalisierungsmittel, die eine Anfrage zur Auslieferung der Bestellung des Kunden signalisiert haben, oder an den Zufahrtsweg, an dem die Anwesenheit des Kunden erkannt wurde, wenn die Artikel in der Pufferlageranlage vorhanden sind.

2. System nach Anspruch 1, **dadurch gekennzeichnet, dass** die ersten Signalisierungsmittel und/oder die zweiten Signalisierungsmittel ein Endgerät umfassen.

3. System nach einem der Ansprüche 1 und 2, **dadurch gekennzeichnet, dass** die ersten Signalisierungsmittel und die zweiten Signalisierungsmittel in einem Abstand von 5 bis 10 Metern voneinander angeordnet sind.

4. System nach einem der Ansprüche 1 bis 3, **dadurch gekennzeichnet, dass** die Zufahrts- und Parkwege schräg angeordnet sind und einen Winkel von 30 bis 50° mit einer Zufahrtsstraße zu der Abholstelle bilden.

5. System nach einem der Ansprüche 1 bis 4, **dadurch gekennzeichnet, dass** die ersten Signalisierungsmittel und/oder die zweiten Signalisierungsmittel mindestens ein Signalisierungselement umfassen, das zu der Gruppe gehört, die mindestens umfasst:
- Barcode-Lesegerät;
- QR-Code-Lesegerät;
- Magnetstreifen- oder Chip-Lesegerät;
- numerische Tastatur zur Eingabe eines Codes;
- biometrisches Identifikationslesegerät, wie beispielsweise ein Fingerabdrucklesegerät.

6. System nach einem der Ansprüche 1 bis 5, **dadurch gekennzeichnet, dass** die Mittel zum Erfassen der Anwesenheit eines Kunden, der eine Bestellung in der Nähe des ersten Parkplatzes aufgegeben hat, und/oder die Mittel zum Erfassen der Anwesenheit eines Kunden, der eine Bestellung in der Nähe des zweiten Parkplatzes aufgegeben hat, mindestens ein Erfassungselement umfassen, das zu der Gruppe gehört, die mindestens umfasst:
- Anwesenheitssensor;
- Geolokalisierungssystem;
- Kennzeichenerkennungsvorrichtung.

7. System nach einem der Ansprüche 1 bis 6, **dadurch gekennzeichnet, dass** die Abholstelle für jeden Zufahrts- und Parkweg Mittel zur Signalisierung der Anzahl der in diesem Zufahrts- und Parkweg geparkten Fahrzeuge umfasst.

8. System nach Anspruch 7, **dadurch gekennzeichnet, dass** die Mittel zur Signalisierung der Anzahl der in einem Zufahrts- und Parkweg geparkten Fahrzeuge eine Ampel umfassen.

9. System nach einem der Ansprüche 1 bis 8, **dadurch gekennzeichnet, dass** die gelagerten Artikel in Behältern an den Abholstationen abgegeben werden und mindestens eine der Abholstationen Mittel zum Transportieren leerer Behälter zu den automatisierten Transportmitteln umfasst.

10. Verfahren zur automatischen Auslieferung von Online-Bestellungen in der Nähe des Kofferraums eines Fahrzeugs an einer Abholstelle mit mehreren Bestellungs-Abholstationen, denen jeweils benachbart ein Zufahrts- und Parkweg für Kraftfahrzeuge zugeordnet ist, wobei jeder Zufahrtsweg einen ersten und einen zweiten Parkplatz für Fahrzeuge umfasst, wobei der zweite Parkplatz hinter dem ersten Parkplatz in der Zufahrt liegt, wobei die Abholstelle verbunden ist mit:
einer automatisierten Pufferlageranlage für bestellte Artikel;
- automatisierten Transportmitteln für die gelagerten Artikel von der Pufferlageranlage zu den Abholstationen,
- einer Verwaltungseinheit für die Auslieferung von Bestellungen, die in der Lage ist, die Entnahme der Artikel einer Bestellung aus der Pufferlageranlage anzuordnen und die Aktivierung der Transportmittel für die Artikel zu steuern; wobei die Abholstelle für jede Abholstation umfasst:
- einen ersten zweidimensionalen Barcode, der vom ersten Parkplatz aus sichtbar ist und Informationen zur Identifizierung der Bestellungs-Abholstation und/oder erste Mittel zur Signalisierung der Anforderung einer Bestellung umfasst, die sich in unmittelbarer Nähe des ersten Parkplatzes befinden, und/oder Mittel zur Erkennung der Anwesenheit eines Kunden, der eine Bestellung in der Nähe des ersten Parkplatzes aufgegeben hat;
- einen zweiten zweidimensionalen Barcode, der von dem zweiten Parkplatz aus sichtbar ist und Informationen zur Identifizierung der Bestellungs-Abholstation und/oder zweite Mittel zur Signalisierung der Anforderung zur Auslieferung einer Bestellung umfasst, die sich in unmittelbarer Nähe des zweiten Parkplatzes befindet, und/oder Mittel zur Erkennung der Anwesenheit eines Kunden, der eine Bestellung in der Nähe des zweiten Parkplatzes aufgegeben hat, wobei das Verfahren die folgenden Schritte umfasst:
- Scannen des zweiten zweidimensionalen Barcodes durch einen Kunden, der eine Bestellung aufgegeben hat, mithilfe einer speziellen Anwendung, die auf ein Endgerät des Kunden heruntergeladen werden kann und in der Lage ist, ein Signal an die Verwaltungseinheit zu senden, das eine Information zur Identifizierung der Bestellung und die Information zur Identifizierung der Bestellungs-Abholstation umfasst, die im zweiten Barcode enthalten sind oder Signalisierung einer Anfrage zur Auslieferung einer Bestellung mithilfe der zweiten Mittel zur Signalisierung oder Erkennung der Anwesenheit eines Kunden in der Nähe des zweiten Parkplatzes;
- ab dem Scannen oder der Signalisierung oder der Erkennung, Erzeugung von Anweisungen durch die Verwaltungseinheit zur Aktivierung der Entnahme aus der Pufferlageranlage der Artikel der signalisierten Bestellung oder der Bestellung des Kunden, der einen der Barcodes gescannt hat, oder der Bestellung des Kunden, der in der Nähe eines Parkplatzes erkannt wurde, und Anweisungen zum Transport der Artikel durch die Transportmittel zu der Abholstation, die mit dem zweiten Barcode verbunden ist, der von dem Kunden gescannt wurde, oder mit den zweiten Signalisierungsmitteln, die eine Anfrage zur Auslieferung der Bestellung des Kunden signalisiert haben, oder mit dem Zufahrtsweg, an dem die Anwesenheit des Kunden erkannt wurde,
- Scannen des ersten zweidimensionalen Barcodes durch denselben Kunden mithilfe der speziellen Anwendung, die auf ein Endgerät des Kunden heruntergeladen werden kann, das in der Lage ist, ein Signal an die Verwaltungseinheit zu senden, das eine Information zur Identifizierung der Bestellung und eine Information zur Identifizierung der Bestellungs-Abholstation umfasst, die im ersten Barcode enthalten sind oder Signalisierung einer Anfrage zur Auslieferung der Bestellung des Kunden mithilfe der ersten Signalisierungsmittel oder Erkennung der Anwesenheit desselben Kunden in der Nähe des ersten Parkplatzes;
- Aushändigung der Artikel der Bestellung an der Abholstation, die mit dem ersten Barcode verbunden ist, der von dem Kunden gescannt wurde, oder mit den ersten Signalisierungsmitteln verbunden ist, die eine Anfrage zur Aushändigung der Bestellung des Kunden signalisiert haben, oder mit dem Zufahrtsweg verbunden ist, auf dem die Anwesenheit des Kunden erkannt wurde.

## Claims

1. A system for the automatic delivery of orders ordered in line near the trunk of a vehicle comprising:
- a pick-up point having a plurality of order picking stations, each of which is associated with an access and parking lane for a motor vehicle, adjacent thereto;
- an automated installation for the buffer storage of ordered items;
- an automated means of routing said stored items from said buffer storage facility to said picking stations,
- an order delivery management unit capable of ordering the collection of the items of an order in said buffer storage facility and of controlling the activation of the means of routing said items,
**characterised in that** each access lane comprises a first vehicle parking space and a second vehicle parking space, said second space being placed behind said first space in said lane, and **in that** said pick-up point comprises, for each order picking station:
- a first 2-dimensional bar code visible from said first parking space comprising information identifying said order picking station and/or first means of signalling the request for delivery of an order located in the immediate vicinity of said first parking space and/or means of detecting the presence of a customer who has placed an order in the vicinity of said first parking space;
- a second 2-dimensional bar code visible from said second parking space comprising information identifying said order picking station and/or second means for signalling the request for delivery of an order located in the immediate vicinity of said second parking space and/or means for detecting the presence of a customer having placed an order in the vicinity of said second parking space,
and **in that** said order delivery management unit is configured so that when said first or said second two-dimensional bar code is scanned by a customer who has placed an order by means of a dedicated application downloadable onto a terminal of said customer capable of transmitting a signal to said management unit comprising information identifying said order and said information identifying said order pick-up station contained in said first or said second bar code, or when a request for delivery of an order is notified by said first or said second signalling means or when the presence of a customer having placed an order is detected in the vicinity of said first or said second parking space, said management unit generates instructions for controlling the activation of the collection, within said buffer storage facility, of the items of the notified order or of the order of the customer having scanned one of said bar codes or of the order of the customer having been detected in the vicinity of a parking space and instructions for controlling the routing of said items by said routing means to the picking station associated with said first bar code or with said second bar code having been scanned by said customer or associated with said first or said second signalling means having notify a request for delivery of the order of said customer, or associated with the access lane where the presence of said customer has been detected if said items are present within said buffer storage facility.

2. A system according to claim 1, **characterised in that** said first signalling means and/or said second signalling means comprise a terminal.

3. A system according to any one of claims 1 and 2, **characterised in that** said first signalling means and said second signalling means are spaced from 5 to 10 metres apart.

4. A system according to any one of claims 1 to 3, **characterised in that** said access and parking lanes are arranged in a herringbone pattern and form an angle of 30 to 50° with a service road of said pick-up point.

5. A system according to any one of claims 1 to 4, **characterised in that** said first signalling means and/or said second signalling means comprise at least one signalling element belonging to the group comprising at least:
- bar code reader;
- QR code reader;
- magnetic strip or chip reader;
- numerical keyboard for entering a code;
- biometric identification reader, such as a fingerprint reader.

6. A system according to any one of claims 1 to 5, **characterised in that** said means for detecting the presence of a customer having placed an order in the vicinity of said first parking space and/or said means for detecting the presence of a customer having placed an order in the vicinity of said second parking space comprise at least one detection element belonging to the group comprising at least:
- presence sensor;
- geolocation system;
- license plate recognition device.

7. A system according to any one of claims 1 to 6, **characterised in that** said pick-up point comprises, for each access and parking lane, means for signalling the number of vehicles parked in said access and parking lane.

8. A system according to claim 7, **characterised in that** said means for signalling the number of vehicles parked in an access and parking lane comprises a traffic light.

9. A system according to any one of claims 1 to 8, **characterised in that**, said stored items being delivered in bins to said picking stations, at least one of said picking stations comprises means for transferring empty bins to said automated routing means.

10. A method for automatically delivering orders ordered in-line near the trunk of a vehicle at a pick-up point having a plurality of order pick-up stations, each of which has an associated motor vehicle access and parking lane adjacent thereto, each access lane comprises a first vehicle parking space and a second vehicle parking space, said second parking space being positioned behind said first parking space in said lane, said pick-up point being associated with:
- an automated buffer storage facility for ordered items;
- automated routing means for said stored items from said buffer storage facility to said picking stations,
- an order delivery management unit able to order the collection of items of an order in said buffer storage facility and to control the activation of the routing means for said items;
said pick-up point comprising, for each order pick-up station:
- a first 2-dimensional bar code visible from said first parking space comprising information identifying said order picking station and/or first means for signalling the request for delivery of an order located in the immediate vicinity of said first parking space and/or means for detecting the presence of a customer who has placed an order in the vicinity of said first parking space;
- a second 2-dimensional bar code visible from said second parking location comprising information identifying said order picking station and/or second order delivery request signalling means located in the immediate vicinity of said second parking space and/or means for detecting the presence of a customer having placed an order in the vicinity of said second parking space, said method comprising the following steps:
- scanning by a customer having placed an order of said second two-dimensional bar code by means of a dedicated application downloadable on a terminal of said customer able to transmit a signal to said management unit comprising an identification information of said order and said identification information of said order picking station contained in said second bar code or signalling a request for delivery of an order by means of said second signalling means or detection of the presence of a customer in the vicinity of said second parking space;
- from said scanning or signalling or said detection, generating by said management unit instructions to activate the collection, within said buffer storage facility, of the items of the signalled order or of the order of the customer having scanned one of said bar codes or of the order of the customer having been detected in the vicinity of a parking space and instructions for controlling the routing of said items by said routing means to the picking station associated with said second bar code having been scanned by said customer or associated with said second signalling means having notified a request for delivery of the order of said customer or associated with the access lane where the presence of said customer has been detected;
- scanning by the same customer of said first two-dimensional bar code by means of said dedicated application downloadable on a terminal of said customer able to transmit a signal to said management unit comprising an identification information of said order and said identification information of said order picking station contained in said first bar code or signalling a request for delivery of the order of said customer by means of said first signalling means or detection of the presence of the same customer in the vicinity of said first parking space;
- delivery of the order items to said picking station associated with said first bar code having been scanned by said customer or associated with said first signalling means having signalled a request for delivery of the order of said customer or associated with the access lane where the presence of said customer has been detected.
